# NEW EUROPEAN PATENT SPECIFICATION

(11) **EP 1 875 953 B2**
(45) Date of publication and mention of the opposition decision: **21.01.2015**
(45) Mention of the grant of the patent: 09.02.2011
(21) Application number: 06116577.5
(22) Date of filing: 04.07.2006
(51) Int. Cl.: B01D 53/34, B01D 53/50, B01D 53/30, B01D 53/68, B01D 53/83

(54) **Method and system for the separation of gaseous pollutants from hot process gases**
Verfahren und Vorrichtung zur Trennung gasförmigen Schadstoffen aus heissen Abgasen
Méthode et dispositif associé pour la séparation de composés gazeux de gaz de procédés chauds

(43) Date of publication of application: 09.01.2008
(73) Proprietor: ALSTOM Technology Ltd, 5401 Baden (CH)
(72) Inventor: Åhman, Stefan, SE-352 42, Växjö (SE)
(74) Representative: Simonsson, Erik

(56) References cited:
- EP-A- 0 978 307
- EP-A1- 0 596 229
- EP-A1- 0 646 404
- WO-A-97/22403
- WO-A-2004/026443
- DK-A- 200 600 649
- US-A- 4 208 381

## Description

### Field of the invention

The present invention relates to a method of separating hydrochloric acid from hot process gases, such as flue gases, in which method the process gases are transported to a gas cleaning system, said gas cleaning system comprising a contact reactor in which the process gases are mixed with a particulate absorbent material, such that said particulate absorbent material reacts with hydrochloric acid, and a dust separator in which the particulate absorbent material is captured, and in which method cleaned process gases leave the dust separator,

The present invention also relates to a gas cleaning system for separating hydrochloric acid from hot process gases.

### Background of the invention

For separating gaseous pollutants, such as hydrochloric acid and sulphur dioxide, from hot process gases, such as flue gases from a coal- or oil-fired power plant or from a waste incineration plant, a method is frequently used, in which a lime-containing particulate absorbent material is introduced into the process gases to react with the gaseous pollutants. When the particulate absorbent material reacts with the gaseous pollutants, the gaseous pollutants are converted chemically or physically into dust, which is then separated in a filter. For example, WO 96/16722 discloses a method, in which lime-containing dust is mixed with water in a mixer, and is then introduced into a contact reactor to react with the gaseous pollutants of a flue gas. Thereafter, the dust formed by this reaction is separated in a filter and is, recirculated to the mixer to be mixed with water, and to be introduced once more into the contact reactor.

The efficiency of the separation of the gaseous pollutants from the flue gas is adjusted by means of controlling the addition of water to the mixer. However, when operating a gas cleaning system in accordance with the teachings of WO 96/16722 the maximum removal efficiency with regard to hydrochloric acid (HCl) is limited by the fact that the dust, which circulates in the gas cleaning system, will become sticky when a large amount of water is added to the mixer.

WO 97/22403 discloses a method of controlling a flue gas cleaning system. The concentration of hydrochloric acid, HCl, in the flue gases is measured. When the concentration of HCl increases the relative humidity, RH, is temporarily increased by means of increasing the dosage of water to a cooling tower.

### Summary of the invention

An object of the present invention is to provide a method of controlling the separation of pollutants from hot process gases in a gas cleaning system, such method being more efficient as regards the removal of hydrochloric acid than the methods disclosed in the teachings of the prior art.

This object is achieved by a method according to claim 1.

An advantage of the method in accordance with the present invention is that the concentration of hydrochloric acid in the cleaned process gases can be efficiently controlled to very low levels without getting dust handling problems caused by sticky dust.

According to a preferred embodiment of the invention said temperature influencing the reaction between said particulate absorbent material and the hydrochloric acid is controlled in at least one of at least a first and a second stage. An advantage of this embodiment is that the control of the temperature can be made more accurate It will also be possible, by means of controlling said first and second stages in different ways, to alter the manner in which the temperature is controlled depending on the present data as regards, e.g., the relative humidity in the gas cleaning system.

More preferably, a method according to claim 3 is provided. An advantage of this embodiment is that the consumption of energy, water, etc., can be decreased by determining to control that stage that provides the best operating conditions in the present situation. It will be appreciated that it can be determined to control either one, two or more stages which are utilized for the control of said temperature influencing the reaction between said particulate absorbent material and the hydrochloric acid.

According to a preferred embodiment of the present invention at least one of said at least a first and a second stage comprises controlling an amount of a diluting gas being added to said hot process gases prior to said process gases entering the contact reactor, said diluting gas having a lower temperature than said hot process gases. Adding a diluting gas of a low temperature to the hot process gases results in efficient cooling of the hot process gases without necessarily increasing the relative humidity in the gas cleaning system. The lower temperature of the process gases results, in accordance with the findings of the present invention, in an increased hydrochloric acid removal efficiency.

According to one preferred embodiment of the present invention said first stage comprises adding said diluting gas to said hot process gases such that a gas mixture is formed, and said second stage comprises adjusting the temperature of said gas mixture by means of an evaporative cooling by means of water. An advantage of this embodiment is that it comprises two different stages in which the temperature of the hot process gases is adjusted. Due to the fact that the second stage includes adding water to the process gases, and thereby increasing the relative humidity thereof, while the first stage comprises diluting the process gases by means of a diluting gas, the temperature can be controlled, at each specific occasion and by means of controlling said first and second stages, to achieve the most cost efficient control of the temperature influencing the reaction between said particulate absorbent material and the hydrochloric acid, without running into problems of sticky dust.

According to a further preferred embodiment of the present invention said first stage comprises adjusting the temperature of said hot process gases by means of a non-evaporative cooling by means of water to obtain cooled process gases, and said second stage comprises adding said diluting gas to said cooled process gases. An advantage of this embodiment of the present invention is that a gas cleaning system can be operated without any evaporative cooling. By avoiding evaporative cooling the constructional costs can be decreased, and the risk is reduced that dust clogging occurs in a device, such as a mixer, which is utilized for transporting particulate absorbent material. Due to the fact that the first stage includes non-evaporative cooling of the hot process gases, which increases the relative humidity thereof, while the second stage comprises diluting the cooled process gases by means of a diluting gas, the temperature can be controlled, at each specific occasion and by means of controlling said first and second stages, to achieve the most cost efficient control of the temperature influencing the reaction between said particulate absorbent material and the hydrochloric acid without running into problems of sticky dust.

Most preferably said diluting gas is ambient air. Ambient air is available in large amounts, and at a low cost. Furthermore, ambient air usually has a low temperature, often in the range of 0-20°C, and usually has a low absolute humidity content. Thus, a comparably low flow of ambient air results in a great cooling of the hot process gases, without adding much humidity thereto.

According to a further preferred embodiment of the present invention a method according to claim 8 is provided. An advantage of this embodiment is that controlling the amount of particulate absorbent material that is transported to the contact reactor, and thereby controlling the relation between the particulate absorbent material and the hydrochloric acid of the hot process gases, enables the efficient control of the gas cleaning system. When the hydrochloric acid removal efficiency must be increased, for example due to the fact that the process gases temporarily have a high temperature and a high relative humidity, thereby rendering the utilization of further evaporative and/or non-evaporative cooling impossible, increasing the amount of particulate absorbent material that is transported to the contact reactor is an efficient way of increasing the hydrochloric acid removal efficiency without increasing the relative humidity in the gas cleaning system. Such an increase in the amount of particulate absorbent material results in increased operating costs, due to an increased pressure drop in the contact reactor and a requirement for more frequent cleaning of the dust separator, and thus, in accordance with this embodiment of the present invention, the amount of particulate absorbent material that is transported to the contact reactor is reduced as soon as it has been determined that a lower amount of particulate absorbent material is sufficient.

Another object of the present invention is to provide a gas cleaning system in which a more efficient removal of hydrochloric acid from hot process gases can be achieved, without running into problems related to sticky dust.

This object is achieved by means of a gas cleaning system according to claim 10.

An advantage of the gas cleaning system in accordance with the present invention is that such a gas cleaning system is operative for efficiently controlling the hydrochloric acid concentration in the cleaned process gases to very low levels without getting problems with sticky dust.

In accordance with a preferred embodiment of the present invention said at least one control device comprises a first control device, and a second control device, said second control device being located downstream, as viewed with reference to the direction of flow of the hot process gases, of said first control device, said control system being operative for controlling said first control device and said second control device. An advantage of this embodiment is that the control system can determine which one/-s of the first control device and the second control device that should be activated when an adjustment of said at least one operating parameter is required, based on the present relative humidity, the present temperature, etc.

In accordance with a preferred embodiment of the present invention said at least one control device comprises a device for controlling that amount of said particulate absorbent material which is transported to the contact reactor. An advantage of this embodiment is that utilizing a device which is operative for controlling the amount of particulate absorbent material that is forwarded to the contact reactor, and thereby the relation between the particulate absorbent material and the hydrochloric acid of the process gases, enables the efficient control of the gas cleaning system.

Further objects and features of the present invention will be apparent from the following description and from the claims.

### Brief description of the drawings

The invention to which the present application is directed will now be described in more detail with reference to the appended drawings in which:
Fig. 1 is a schematic side view illustrating a gas cleaning system according to a first embodiment of the present invention, as seen from the side thereof.
Fig. 2 is a schematic side view illustrating the manner in which a control system is operative for controlling the gas cleaning system that is illustrated in Fig. 1.
Fig. 3 is a flow diagram illustrating the method in accordance with an embodiment of the present invention.
Fig. 4a is a diagrammatical illustration of the reaction temperature and the concentration of hydrochloric acid in the cleaned process gases.
Fig. 4b is a diagrammatical illustration of the relative humidity and the concentration of hydrochloric acid in the cleaned process gases.
Fig. 5 is a diagrammatical illustration of the gas temperature and the relative humidity in different locations of the gas cleaning system of said first embodiment of the present invention.
Fig. 6 is a schematic side view illustrating a gas cleaning system according to a second embodiment of the present invention, as seen from the side thereof.
Fig. 7 is a diagrammatical illustration of the gas temperature and the relative humidity in different locations of the gas cleaning system of said second embodiment of the present invention.
Fig. 8 is a schematic side view illustrating a gas cleaning system according to a third embodiment of the present invention, as seen from the side thereof.
Fig. 9 is a diagrammatical illustration of the amount of the particulate absorbent material and the concentration of hydrochloric acid in the cleaned process gases.

### Description of preferred embodiments

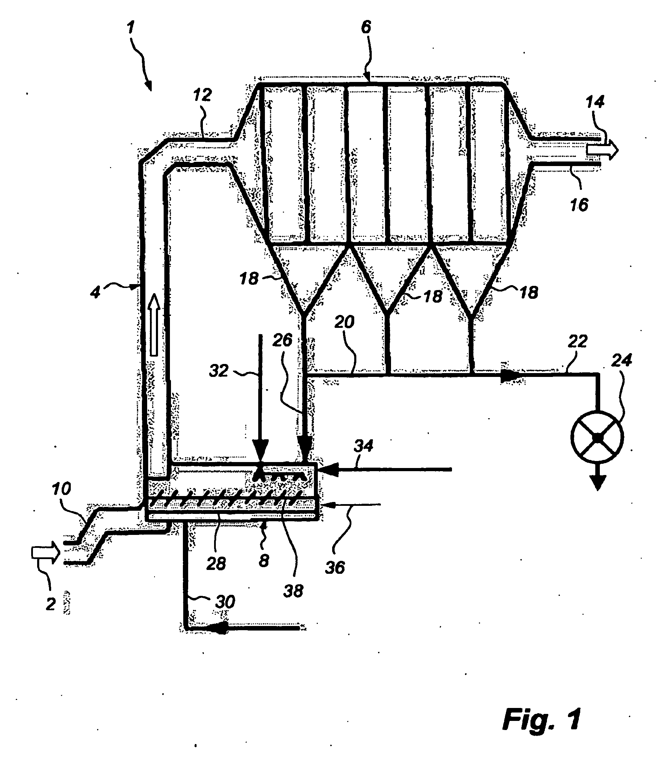

Fig. 1 is a schematic representation of a gas cleaning system 1, as seen from the side thereof. The gas cleaning system 1 is utilized for cleaning a gas mixture 2. The gas mixture 2 contains dust, such as fly ash, and gaseous pollutants, such as sulphur dioxide and hydrochloric acid. The gas cleaning system 1 comprises a contact reactor 4, a dust separator in the form of a fabric filter 6, that is sometimes referred to as a bag house, and a mixer 8. The gas mixture 2 is, via a duct 10, transported to the contact reactor 4. The contact reactor 4 is operative for contacting a particulate absorbent material, which is reactive with the gaseous pollutants of the gas mixture 2, with the gas mixture 2 in order to convert the gaseous pollutants of the gas mixture 2 into separable dust. The gas mixture 2 is transported, via a duct 12, to the fabric filter 6 in which the formed dust, the fly ash, and the remaining particulate absorbent material are separated from the gas mixture 2. The particulate absorbent material reacts with the hydrochloric acid of the gas mixture 2 both in the contact reactor 4 and in the fabric filter 6. The cleaned process gases, which have the form of cleaned flue gases 14, are transported from the fabric filter 6 via a duct 16 and are emitted into the ambient air via a stack, which is not shown in Fig. 1. The fabric filter 6 comprises three dust hoppers 18 that collect the separated dust, the fly ash and the remaining particulate absorbent material.

The separated dust, the fly ash and the remaining particulate absorbent material are transported to a common dust storage system 20. A minor portion of the dust, fly ash and remaining particulate absorbent material which are separated in the fabric filter 6 is discharged from the gas cleaning system 1 via a pipe 22. The pipe 22 opens into a rotary discharger 24. The discharged material is transported from the rotary discharger 24 to a silo, which is not shown, that is operative for storing the discharged material until the discharged material is transported to a landfill.

The major portion of the dust, fly ash and remaining particulate absorbent material that are collected in the fabric filter 6 is transported, via a pipe 26, to the mixer 8. The mixer 8 is provided with a fluidising net or cloth 28. Pressurised air is introduced under the cloth 28 via a pipe 30 in order to fluidise the material in the mixer 8.

The mixer 8 is provided with a pipe 32, which is operative for supplying water to the mixer 8. Fresh absorbent, such as burnt lime, CaO, or hydrated lime, Ca(OH)₂, is supplied to the mixer 8 via a pipe 34. The water is added to the mixer 8 via the pipe 32 for the purpose of moistening the material in the mixer 8, and for the purpose of enhancing the slaking rate of any burnt lime, CaO, comprised in the fresh absorbent to form hydrated lime, Ca(OH)₂.

The amount of fresh absorbent that is supplied via the pipe 34 is usually controlled to a certain stoichiometric ratio, SR. The SR describes how much fresh absorbent, calculated as moles of calcium ions, Ca²⁺, that is required to react with one mole of sulphur dioxide, SO₂, or with two moles of hydrochloric acid, HCl. Ideally the stoichiometric ratio is 1.0, which means that each mole of SO₂ entering the gas cleaning system 1, and being removed therein, correspond to one mole of Ca²⁺ consumed, and that each mole of HCl entering the gas cleaning system 1, and being removed therein, correspond to ½ mole of Ca²⁺ consumed. Gas cleaning systems operating according to the teachings of the prior art often exhibit SR in the range of 3, which means that each mole of SO₂ consumes 3 moles of Ca²⁺, and each mole of HCl consumes 1.5 moles of Ca²⁺, due to the fact that the reaction conditions are not ideal. On the contrary, when operating the gas cleaning system 1, it has been found possible to utilize a SR of less than 2, which substantially decreases the operating costs.

Further additives, such as activated carbon, can be supplied via a pipe 36. The mixer 8 is provided with an agitator 38 which is operative for the purpose of thoroughly mixing the material that the mixer 8 has received from the fabric filter 6, i.e., the dust, the fly ash and the remaining particulate absorbent, with said fresh absorbent, said water, and said further additives, such that a particulate absorbent material being ready to be introduced in the contact reactor 4 is formed by means of the mixer 8. A thorough description of a mixer which can be utilized in the present invention may be found in the document WO 97/37747. Said particulate absorbent material, that has been formed by mixing the dust, the fly ash, and the remaining particulate absorbent material from the fabric filter 6 with fresh absorbent and water in the mixer 8, is introduced as said particulate absorbent material at the bottom of the contact reactor 4 and is thereby introduced into the gas mixture 2 for absorbing further gaseous pollutants therefrom. It will be appreciated that the particulate absorbent material is circulated many times in the gas cleaning system 1. The minor portion of the particulate absorbent material which is discharged via the rotary discharger 24 serves the purpose of keeping the amount of solid material in the gas cleaning system 1 constant. The gas mixture 2 contains some fly ash, reaction products are formed continuously, and fresh absorbent and additives are supplied, such that there is a continuous flow of solid material into the gas cleaning system 1. The continuous flow of solid material into the gas cleaning system 1 is compensated for by the discharge of solid material via the rotary discharger 24. Thus, the amount of solid material that is present in the gas cleaning system 1 is rather constant over time.

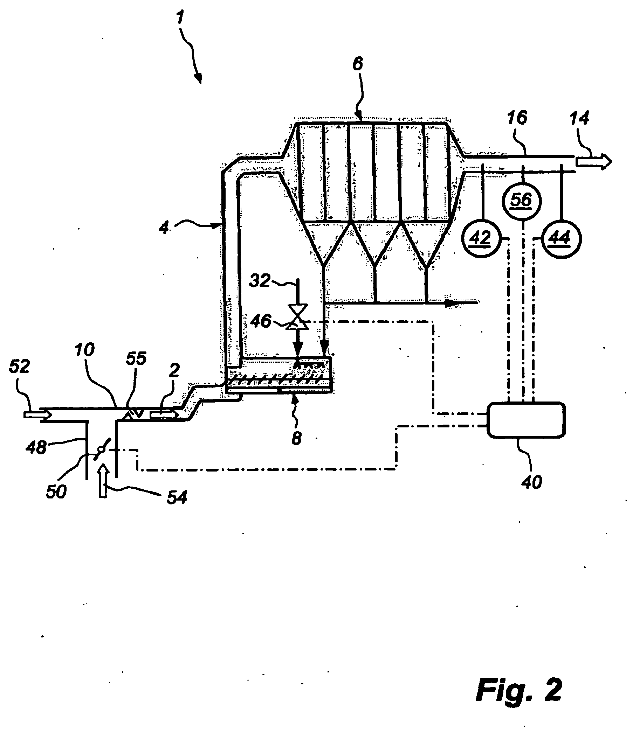

Fig. 2 illustrates a control system in the form of a process computer 40 that is operative for controlling the operation of the gas cleaning system 1. A first measurement device in the form of an HCl-analyser 42 is operative for measuring the concentration of hydrochloric acid, HCl, in the cleaned flue gases 14 that leave the fabric filter 6 via the duct 16. A second measurement device in the form of a combined oxygen and moisture content analyser 44 is operative for measuring the concentration of oxygen and the amount of water vapour in the cleaned flue gases 14 that leave the fabric filter 6 via the duct 16. Thus, both the HCl-analyser 42 and the combined oxygen and moisture content analyser 44 are arranged for measuring the respective gas properties inside the duct 16, as can be seen in Fig. 2. A control valve 46 is connected to the pipe 32 and is operative for controlling the amount of water that is fed to the mixer 8 via the pipe 32. A dilution air duct 48 is connected to the duct 10. The dilution air duct 48 is located upstream of the location where the mixer 8 introduces the particulate absorbent material in the contact reactor 4. The dilution air duct 48 is equipped with a damper 50. The process computer 40 is operative for controlling the opening degree of the damper 50 and the opening degree of the control valve 46. The damper 50 comprises a shifting motor, which is not shown in Fig. 2 for reasons of providing a clear illustration, to facilitate the adjustment of the opening degree of the damper 50. Hot process gases, which have the form of concentrated flue gases 52 and which are formed during incineration of a waste, such as municipal or industrial waste, in a waste incinerator, not shown, are transported through the duct 10, and are diluted by means of a diluting gas which has the form of an ambient air flow 54, which is transported via said dilution air duct 48. A static mixer 55, which is located inside the duct 10 and downstream of said dilution air duct 48, is utilized to generate efficient mixing between the concentrated flue gases 52 and the ambient air flow 54, such that the gas mixture 2 is generated. The ambient air flow 54 has a lower temperature than the concentrated flue gases 52, and, thus, the gas mixture 2 will have a temperature which lies between that of the concentrated flue gases 52, which will typically have a temperature of 120-250°C, and that of the ambient air flow 54, which will typically have a temperature in the range of -20°C to +35°C, most often in the range of 0°C to 20°C. The gas mixture 2, which is generated by means of said mixing of the concentrated flue gases 52 and the ambient air flow 54, is transported to the contact reactor 4 as described hereinbefore with reference to Fig. 1. Typically the magnitude of the ambient air flow 54 is controlled, as will be described in more detail hereinafter, to constitute 0-30%, on a mass basis, of the gas mixture 2, the rest of the gas mixture 2, i.e., 100-70%, on a mass basis, of the gas mixture 2 originating from the concentrated flue gases 52.

In accordance with what has been described hereinbefore, the mixer 8 introduces the moistened material as a particulate absorbent material into the gas mixture 2 at the lower portion of the contact reactor 4. The water contained in the moistened material will evaporate quickly upon contact with the gas mixture 2. By the evaporation of the water the temperature of the gas mixture 2 is decreased. Thus, the concentrated flue gases 52 are cooled in a first stage by means of diluting the concentrated flue gases 52 with the ambient air flow 54, and then, in a second stage, the gas mixture 2 thus formed is cooled further by means of evaporative cooling in the contact reactor 4.

A temperature analyser in the form of a temperature sensor 56 is operative for measuring the temperature of the cleaned flue gases 14 that leave the fabric filter 6 via the duct 16. The properties of the cleaned flue gases 14 in the duct 16 as regards temperature, oxygen, and moisture, which properties are measured by means of the temperature sensor 56 and the combined oxygen and moisture content analyser 44, can be said to represent the conditions in the upper part of the contact reactor 4 and in the fabric filter 6. After the upper part of the contact reactor 4 there is no further cooling of the gas mixture 2 and no addition of water and, thus, the properties measured by the temperature sensor 56 and the combined oxygen and moisture content analyser 44 reflect the conditions under which the hydrochloric acid reacts with the particulate absorbent material inside the contact reactor 4 and inside the fabric filter 6.

It has been found, as will be described hereinafter, that the emission of hydrochloric acid, i.e., HCl, from the gas cleaning system 1, i.e., the concentration of HCl in the cleaned flue gases 14 that leave the gas cleaning system 1, is strongly dependent on the temperature at which the particulate absorbent material reacts with the HCl in the contact reactor 4 and in the fabric filter 6. By lowering the temperature inside the contact reactor 4 and inside the fabric filter 6, the removal efficiency with regard to HCl can be improved. Thus, it would appear to be beneficial to add as much water as possible to the mixer 8, by means of the pipe 32, to obtain maximum cooling of the gas mixture 2, and, thus, to obtain a low temperature in the contact reactor 4 and in the fabric filter 6. However, adding a large amount of water via the pipe 32 has the side effect of increasing the relative humidity, RH, in the cleaned flue gases 14. When the relative humidity in the cleaned flue gases 14 increases above about 6-7%, the dust, fly ash and particulate absorbent material, which are circulated in the contact reactor 4, the fabric filter 6 and the mixer 8, becomes sticky. Due to this fact, a relative humidity of more than 6-7% cannot be accepted, since dust that is sticky can cause severe clogging problems, in particular in the fabric filter 6 and in the mixer 8.

In accordance with the first embodiment of the present invention, the concentrated flue gases 52 are cooled in a first stage by means of mixing the concentrated flue gases 52 with the ambient air flow 54 thereby forming a gas mixture 2, such gas mixture 2 having a lower temperature than the concentrated flue gases 52, and in a second stage by means of the water being added to the mixer 8 via the pipe 32 effecting an evaporative cooling of the gas mixture 2 inside the contact reactor 4. Said first stage thus being executed before, i.e., upstream, of said second stage. Thus, the gas cleaning system 1 comprises a first control device in the form of the damper 50 controlling the magnitude of the ambient air flow 54, and a second control device in the form of the valve 46 controlling the amount of water added to the mixer 8 via the pipe 32. The process computer 40 can control each one of the first and second control devices, i.e., the damper 50 and the valve 46, to effect a suitable temperature, with regard to the reaction between the particulate absorbent material and the HCl, in the contact reactor 4 and in the fabric filter 6. Thus, the process computer 40 can control the damper 50 to open to such a degree that a suitable magnitude of the ambient air flow 54 can pass through the dilution air duct 48 to dilute the concentrated flue gases 52. The absolute moisture content of the ambient air flow 54 is typically 0-3 %by volume. The absolute moisture content of the concentrated flue gases 52 is typically about 10-30%by volume. Thus, the absolute moisture content of the ambient air flow 54 is lower than the absolute moisture content of the concentrated flue gases 52. Thus, the dilution of the concentrated flue gases 52 by means of the ambient air flow 54 results in that the gas mixture 2 formed by such dilution has a lower absolute moisture content than the concentrated flue gases 52. Due to this fact, the problems of the dust becoming sticky in the fabric filter 6 and in the mixer 8 are reduced. Furthermore, the dilution of the concentrated flue gases 52 by means of the ambient air flow 54 will result in a temperature reduction, because the temperature of the ambient air flow 54 is typically 0-20°C, which is considerably lower than the temperature of concentrated flue gases 52, which typically have a temperature of 120-250°C. Consequently, the dilution of the concentrated flue gases 52 by means of the ambient air flow 54 provides a temperature reduction, which, as has been described hereinbefore, provides for improved efficiency for removing HCl. Thus, the temperature in the contact reactor 4 and in the fabric filter 6 can be lowered to such levels that HCl removal is efficient, without causing problems with sticky dust.

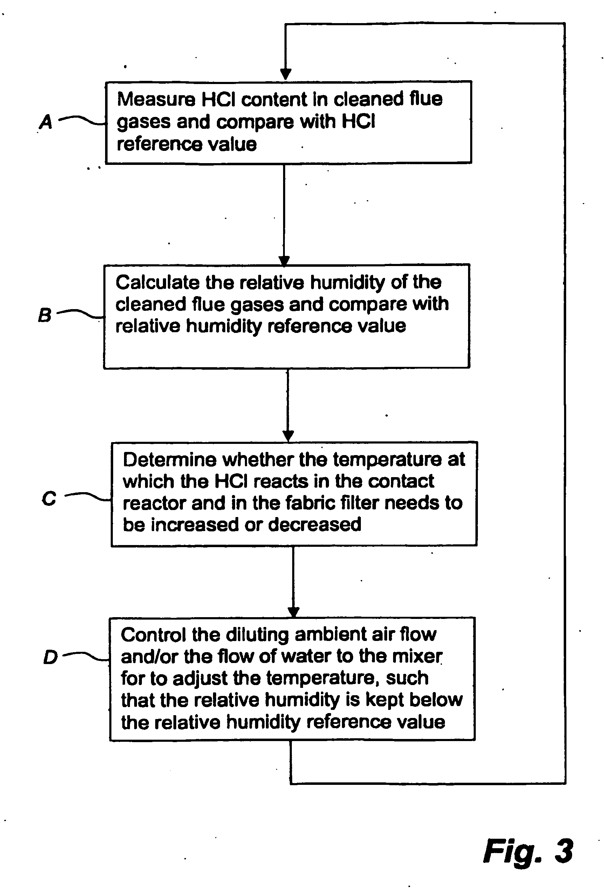

Fig. 3 illustrates one manner in which the process computer 40, which is shown in Fig. 2, is operative to control the gas cleaning system 1.

In a first step, denoted A in Fig. 3, the HCl-analyser 42, which is shown in Fig. 2, measures the present HCl content in the cleaned flue gases 14. The information regarding the present concentration of HCl in the cleaned flue gases 14 is forwarded from the HCl-analyser 42 to the process computer 40. The combined oxygen and moisture content analyser 44 measures the present concentrations of oxygen, O₂, and moisture, H₂O, in the cleaned flue gases 14. Information regarding the present concentration of oxygen and moisture in the cleaned flue gases 14 is forwarded from the combined oxygen and moisture content analyser 44 to the process computer 40. Information regarding the present flue gas temperature is forwarded from the temperature sensor 56 to the process computer 40. The process computer 40 calculates, based on the information which the process computer 40 has received from the HCl-analyser 42, the combined oxygen and moisture content analyser 44, and the temperature sensor 56, the present concentration of HCl in the cleaned flue gases 14. Preferably the process computer 40 converts the measured present HCl concentration to a HCl concentration at standard conditions, such as at normal temperature and pressure, dry gas (= d.g.) and at 11%O₂. It will be recognized that such a conversion provides an HCl concentration, in the unit mg HCl/Nm³ d.g. 11%O₂, which is independent of any dilution, evaporative cooling and temperature reduction. The process computer 40 then compares the measured present HCl concentration in the cleaned flue gases 14 with an HCl reference value, in the same unit. The HCl reference value could be a value that has been fixed by environmental authorities, or could be a value which is based on requirements of downstream equipment.

In a second step, denoted B in Fig. 3, the process computer 40 calculates the present relative humidity of the cleaned flue gases 14. The present relative humidity is calculated based on the present concentration of moisture in the cleaned flue gases 14, as measured by means of the combined oxygen and moisture content analyser 44, and the present temperature in the flue gases 14, as measured by means of the temperature sensor 56. The calculated present relative humidity is compared with a relative humidity reference value. The relative humidity reference value is often the maximum relative humidity that can be accepted without running into problems with sticky dust in the fabric filter 6 and in the mixer 8.

In a third step, denoted C in Fig. 3, the process computer 40 determines whether the temperature at which the particulate absorbent material reacts with HCl in the contact reactor 4 and in the fabric filter 6 needs to be increased or decreased for the measured HCl concentration of the cleaned flue gases 14 to approach the HCl reference value.

In a fourth step, denoted D in Fig. 3, the process computer 40 sends instructions to the valve 46 controlling the transport of water via the pipe 32 to the mixer 8, and to the damper 50 controlling the magnitude of the ambient air flow 54 to adjust the temperature at which the particulate absorbent material reacts with HCl in the contact reactor 4 and in the fabric filter 6, such that the measured HCl concentration in the cleaned flue gases 14 will approach the HCl reference value. In the gas cleaning system 1 of the first embodiment of the present invention the temperature at which the particulate absorbent material reacts with HCl in the contact reactor 4 and in the fabric filter 6 can be adjusted in three different manners. According to a first manner of adjusting the temperature the process computer 40 sends a signal to the valve 46 to change its degree of opening, such that a larger or a smaller water flow is transported through the pipe 32 to the mixer 8, thereby resulting in an increased or decreased evaporative cooling of the gas mixture 2 inside the contact reactor 4. According to a second manner of adjusting the temperature the process computer 40 sends a signal to the damper 50 to increase or decrease the opening degree thereof. An increased opening degree of the damper 50 causes the magnitude of the ambient air flow 54 that is forwarded via the dilution air duct 48 to be increased. The increased magnitude of the ambient air flow 54 will, as has been described hereinbefore, result in a decreased temperature and a decreased humidity of the gas mixture 2. A decreased opening degree of the damper 50 causes the magnitude of the ambient air flow 54 that is forwarded via the dilution air duct 48 to be decreased. The decreased magnitude of the ambient air flow 54 will, as has been described hereinbefore, result in an increased temperature and an increased humidity of the gas mixture 2. According to a third manner of adjusting the temperature the process computer 40 send signals both to the valve 46 for changing the opening degree thereof to change the amount of water that is transported to the mixer 8, and to the damper 50 for changing the opening degree thereof to change the magnitude of the ambient air flow 54 being transported via the dilution air duct 48.

The choice between the three manners of changing the temperature described hereinbefore depends on the present conditions. If, for example, the damper 50 is already closed, such that the magnitude of the ambient air flow 54 is zero, then an adjustment to a higher temperature at which the particulate absorbent material reacts with HCl in the contact reactor 4 and in the fabric filter 6 must be effected by decreasing the opening degree of the valve 46 that controls the amount of water being transported to the mixer 8 via the pipe 32. If, in accordance with a further example, the present relative humidity is close to or even above the relative humidity reference value, then the amount of water added to the mixer 8 cannot be increased, and it is, thus, necessary to effect an adjustment to a lower temperature at which the particulate absorbent material reacts with HCl in the contact reactor 4 and in the fabric filter 6 by means of increasing the magnitude of the ambient air flow 54. If, in accordance with yet another alternative example, the relative humidity is somewhat lower than the relative humidity reference value, the process computer 40 can instruct the valve 46 to increase slightly the amount of water transported via the pipe 32 to the mixer 8, and at the same time instruct the damper 50 to increase the magnitude of the ambient air flow 54, to decrease the temperature at which the particulate absorbent material reacts with HCl in the contact reactor 4 and in the fabric filter 6 by means of increasing the dilution of the concentrated flue gases 52 by means of the ambient air flow 54, and by means of increasing the evaporative cooling of the gas mixture 2 that is formed by such dilution.

The steps A to D that are depicted in Fig. 3 are repeated continuously with a frequency that is determined by, among other things, the function of the measurement devices 42, 44, 56 and the control system 40. Typically, the steps A to D could be run once every 1-30 seconds.

It will be appreciated that there are situations in which the process computer 40 has the option of either adjusting the dilution of the concentrated flue gases 52 by means of controlling the damper 50, or adjusting the evaporative cooling of the gas mixture 2 by means of controlling the valve 46, both such options making it possible, in such situations, to comply with the primary requirement of keeping the HCl concentration below the HCl reference value, and keeping the relative humidity below the relative humidity reference value. The process computer 40 could, for such situations, effect such adjustment in accordance with a secondary requirement, which could be specific for each waste incineration plant. Such a secondary requirement could be to keep the dilution air at a minimum, or to keep the water consumption at a minimum.

### Example 1

The function of the gas cleaning system 1 of the present invention as described hereinbefore with reference to Fig. 1, 2 and 3, will now be explained further by way of a non-limiting example. The properties of the concentrated flue gases 52 are, in this example,: temperature 230°C, relative humidity 5.5%, HCl concentration: 1000 mg HCl/Nm³ d.g. 11%O₂. Table 1 indicates the data that have been calculated, based on measurements in the cleaned flue gases 14, in said steps A and B at a certain occasion:

**Table 1. Present data**

| Property | Unit | Reference value | Present data |
|---|---|---|---|
| HCl concentration in cleaned flue gases | mg HCl/Nm³ d.g. 11%O₂ | < 10* | 12 |
| Relative Humidity | % | < 7** | 7 |
| Temperature in contact reactor and fabric filter | °C | - | 150 |

| | | | |
|---|---|---|---|
| * Set by the environmental authorities ** Determined by req. to avoid sticky dust | | | |

With the properties of Table 1 it is determined in said step C that efforts are necessary to decrease the HCl concentration in the cleaned flue gases 14, and that such efforts include decreasing the temperature at which the HCl reacts with the particulate absorbent material in the contact reactor 4 and in the fabric filter 6. It is, at the occasion illustrated by means of Table 1, not possible to add more water to the mixer 8, due to the high relative humidity of the cleaned flue gases 14. According to the teachings of the prior art a situation such as that described in Table 1 would be handled by drastically increasing the feed of fresh absorbent, e.g., CaO, with increased operating costs and an increase in the amount of rest product as a result. However, in accordance with the teachings of the present invention the HCl concentration in the cleaned flue gases 14 depend on the temperature at which the particulate absorbent material reacts with HCl in the contact reactor 4 and in the fabric filter 6.

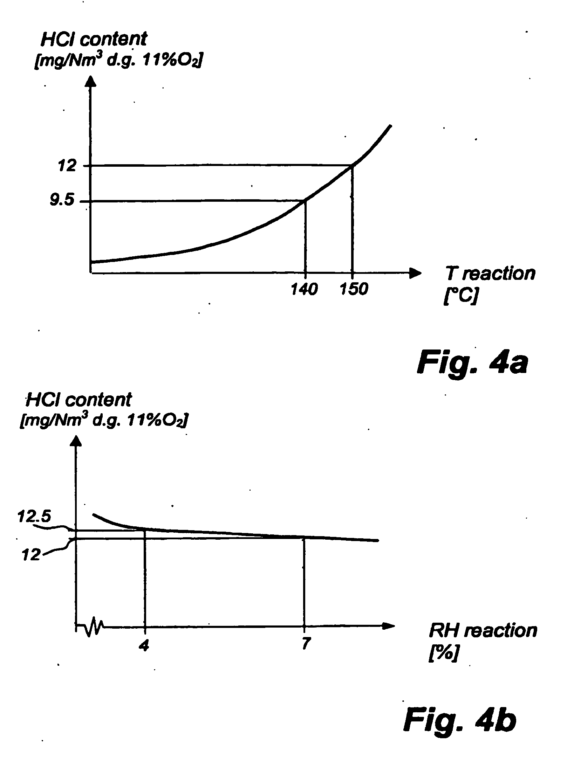

Fig. 4a illustrates schematically the finding underlying the present invention as regards the relation between the HCl concentration in the cleaned flue gases 14 and the temperature, such temperature being denoted "T reaction" in Fig. 4a, at which temperature the particulate absorbent material reacts with the HCl in the contact reactor 4 and in the fabric filter 6. The curve illustrated in Fig. 4a is valid at a relative humidity of 7% in the contact reactor 4 and the fabric filter 6, such relative humidity being considered to be equal to the relative humidity of the cleaned flue gases 14 and being calculated from the present concentration of moisture in the cleaned flue gases 14, as measured by means of the combined oxygen and moisture content analyser 44, and the present temperature of the cleaned flue gases 14, as measured by means of the temperature sensor 56 as described hereinbefore. As can be seen from Fig. 4a a temperature of 150°C, such temperature being measured by means of the temperature sensor 56 as described hereinbefore, in the contact reactor 4 and in the fabric filter 6 corresponds to the measured HCl concentration in the cleaned flue gases 14, as indicated in Table 1, of 12 mg HCl/Nm³ d.g. 11%O₂. By decreasing the temperature at which the particulate absorbent material reacts with the HCl to 140°C the present HCl concentration in the cleaned flue gases 14 can be expected to decrease to 9.5 mg HCl/Nm³ d.g. 11%O₂, i.e., below the HCl reference value, in accordance with the curve of Fig. 4a. The temperature at which the particulate absorbent material reacts with the HCl in the contact reactor 4 and in the fabric filter 6 is, based on the situation as regards the present relative humidity of 7% as described hereinbefore with reference to Table 1, decreased by means of increasing the degree of opening of the damper 50, such that the magnitude of the ambient air flow 54 is increased. Such increased opening of the damper 50 results in the temperature of gas mixture 2 being decreased such that the temperature of the cleaned flue gases 14 decreases to 140°C.

Fig. 4b illustrates schematically the finding underlying the present invention as regards the relation between the HCl concentration in the cleaned flue gases 14 and the present relative humidity, such present relative humidity being denoted "RH reaction" in Fig. 4b, at which relative humidity the particulate absorbent material reacts with the HCl in the contact reactor 4 and in the fabric filter 6. As described hereinbefore such present relative humidity is calculated based on the present concentration of moisture in the cleaned flue gases 14, as measured by means of the combined oxygen and moisture content analyser 44, and the present temperature in the flue gases 14, as measured by means of the temperature sensor 56. The curve illustrated in Fig. 4b is valid at a temperature of 150°C in the contact reactor 4 and the fabric filter 6, such temperature being measured by means of the temperature sensor 56 as described hereinbefore. As can be seen from Fig. 4b the HCl concentration in the cleaned flue gases 14 is 12.5 mg HCl/Nm³ d.g. 11%O₂ at 4% relative humidity. At 7% relative humidity the HCl concentration in the cleaned flue gases is 12.0 mg HCl/Nm³ d.g. 11%O₂. Thus, it can be concluded from Fig. 4a and Fig. 4b that the removal of HCl is strongly dependent on the temperature at which the particulate absorbent material reacts with the HCl in the contact reactor 4 and in the fabric filter 6, and that the removal of HCl is weakly dependent on the relative humidity at which the particulate absorbent material reacts with the HCl in the contact reactor 4 and in the fabric filter 6. As can be seen in Fig. 4b the concentration of HCl in the cleaned flue gases 14 increases more steeply at a relative humidity of less than 4 %. Thus, the relative humidity at which the particulate absorbent material reacts with the HCl in the contact reactor 4 and in the fabric filter 6 is preferably controlled to be in the range of 4-7%, to achieve efficient removal of HCl without running into problems of sticky dust. It will be appreciated that the curves of Fig. 4a and Fig. 4b will be specific for each waste incineration plant, and that the exact appearance of the curves will depend on the type and the amount of the fly ash, the type and the amount of the fresh absorbent, the amount of particulate absorbent material that is transported to the contact reactor 4, the concentration of HCl in the concentrated flue gases 52, etc., of each specific plant. The fundamental relation between the HCl concentration and the temperature on the one hand, and the fundamental relation between the HCl concentration and the relative humidity on the other hand, and the fundamental appearance of the curves illustrating such relations, will still be the same as those relations depicted in Fig. 4a and Fig. 4b.

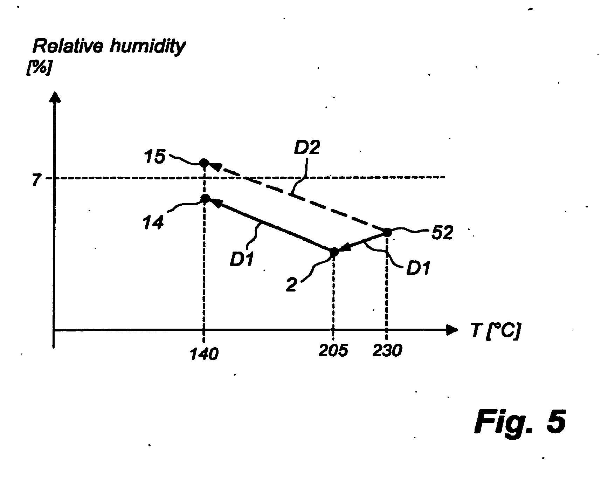

Fig. 5 illustrates the manner in which, according to said step D, the temperature of the concentrated flue gases 52 is adjusted for the purpose of obtaining the required increase in the HCl removal efficiency, as required based on what has been described hereinbefore with reference to Table 1 and Fig. 4a, without violating the requirement as regards the relative humidity. In Fig. 5 the x-axis represents the temperature, indicated as "T [°C]", of the gases depicted in Fig. 2, and the y-axis represents the corresponding relative humidity of such gases. The change in temperature is indicated by a curve D1. As shown in Fig. 5 the concentrated flue gases 52 have, in Example 1, a temperature, as described hereinbefore, of 230°C and a relative humidity of 5.5%. The process computer 40 controls, in accordance with said step D described hereinbefore with reference to Fig. 3, the damper 50 to open to such a degree that the gas mixture 2, such gas mixture 2 being a mixture of the concentrated flue gases 52 and the ambient air flow 54, obtains a temperature of 205°C, and a relative humidity of about 4%. The properties of the gas mixture 2 are indicated in Fig. 5, from which it is clear that the temperature has been decreased without any increase in the relative humidity. Furthermore, the process computer 40 controls, in accordance with said step D described hereinbefore with reference to Fig. 3, the valve 46 controlling the addition of water to the mixer 8 via the pipe 32 to open to such a degree that the gas mixture 2 is cooled by means of evaporative cooling to the requested temperature of 140°C, i.e., to the temperature requested to effect a sufficiently efficient reaction between the HCl and the particulate absorbent material inside the contact reactor 4 and the fabric filter 6, in accordance with Fig. 4a. As shown in Fig. 5 such evaporative cooling cools the gas mixture 2 from a temperature of 205°C to a temperature of 140°C. At the same time the relative humidity increases, due to the evaporative cooling, from about 4% to about 6.5%, such relative humidity being, as shown in Fig. 5, below the relative humidity reference value of 7%. In Fig. 5 the properties after such evaporative cooling are represented by the properties of the cleaned flue gases 14, because, as has been described hereinbefore, the conditions under which the HCl reacts with the particulate absorbent material in the contact reactor 4 and in the fabric filter 6 are substantially equal to the properties of the cleaned flue gases 14. Thus, it can be concluded from Fig. 5 that the cooling in two stages, i.e., in a first stage by means of diluting the concentrated flue gases 52 by means of the ambient air flow 54, and then in a second stage by means of evaporative cooling of the thus formed gas mixture 2, provides for efficient cooling to a temperature, represented by the temperature of the cleaned flue gases 14, which is sufficiently low to obtain the requested removal of HCl in the gas cleaning system 1. In Fig. 5 a curve D2, which is shown by a dashed line, illustrates the effect of cooling the concentrated flue gases 52 to 140°C by means of evaporative cooling only. As illustrated by the curve D2 such cooling would give a gas, which is indicated as a gas 15 in Fig. 5, which has a relative humidity which is above the relative humidity reference value of 7%. Such cooling by means of only evaporative cooling can therefore cause severe handling problems due to sticky dust.

It may be noted that all HCl values are given in the unit "mg HCl/Nm³ d.g. 11%O₂" as described hereinbefore. Such a unit, which has a fixed pressure, temperature and oxygen content as reference, accounts for any dilution by means of ambient air in such a way that the improved removal of HCl due to the lower temperature is a true improvement in the removal efficiency, and is not a fictitious improvement caused by the dilution as such.

In contrast to the present invention, an example of which is illustrated by the curve D1 which is depicted in Fig. 5, the teachings of the prior art would suggest a heavy increase in the amount of fresh absorbent, such as CaO, that is fed to the mixer via the pipe 34. Thus, the gas cleaning system 1, and the method of controlling a gas cleaning system 1, provide for efficient removal of HCl, low HCl emission, and low consumption of fresh absorbent.

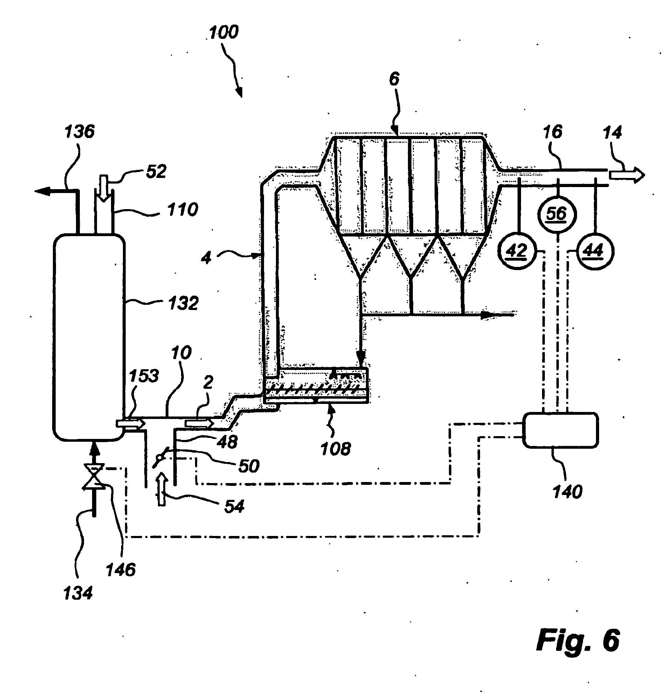

Fig. 6 illustrates a second embodiment of the present invention in the form of a gas cleaning system 100. Those parts of the gas cleaning system 100 that have a similar design and function as the corresponding parts of the gas cleaning system 1 that has been described hereinbefore with reference to Fig. 1 and Fig. 2 have been given the same reference numerals and are not described in more detail. The main difference between the gas cleaning system 100 and the gas cleaning system 1 described hereinbefore with reference to Fig. 1 and Fig. 2 is that the gas cleaning system 100 has no means for feeding water to a mixer 108, which, other than the lack of means for feeding water, has a similar design as the mixer 8, which has been described hereinbefore with reference to Fig. 1. The gas cleaning system 100 has an economizer 132. The concentrated flue gases 52 enter the economizer 132 via an inlet duct 110, and leave the economizer 132 in the form of cooled concentrated flue gases 153 via the duct 10. Cold water is transported to the economizer 132 via a pipe 134. A control valve 146 controls the flow of cold water to the economizer 132 via the pipe 134. The cold water is transported in tubes inside the economizer 132 in such a manner that heat is transferred from the concentrated flue gases 52 to the cold water. The cold water is thereby heated to a hot water which is transported from the economizer 132 via a pipe 136. Thus, the cooling of the concentrated flue gases 52 is performed by means of an indirect, i.e., non-evaporative, cooling inside the economizer 132 in a first stage. The dilution air duct 48, which is located on the duct 10 downstream of the economizer 132, performs the same type of cooling by means of an ambient air flow 54, the magnitude of which can be controlled by means of the damper 50, as has been described hereinbefore with reference to Fig. 1 and Fig. 2. Thus, the cooling of the concentrated flue gases 52 is effected in a first stage by means of the economizer 132 effecting a non-evaporative cooling by means of cold water, and then in a second stage by means of diluting the cooled concentrated flue gases 153 by means of the ambient air flow 54, such that the gas mixture 2 is formed. The fact that no water is added to the mixer 108 of the gas cleaning system 100 may decrease the efficiency of the HCl removal. However, by increasing the recirculation ratio, such that the particulate absorbent material is circulated more times through the contact reactor 4, the avoidance of adding water to the mixer 108 can be compensated for. Preferably the dust circulating in the gas cleaning system 100 should be circulated that many times that at least 150 g, preferably 150-5000 g, of particulate absorbent material is transported from the mixer 108 to the contact reactor 4 per each m³ of the gas mixture 2 that passes through the contact reactor 4, i.e., each m³ of the gas mixture 2 should be contacted with at least 150 g, preferably 150-5000 g, of particulate absorbent material. In this regard "m³" refers to the conditions in the fabric filter 6, i.e., the properties which are measured in the duct 16 in accordance with what has been described hereinbefore with reference to Fig. 2, and thus "m³" refers to the gas volume at the actual temperature, pressure, and oxygen content being at hand inside the dust separator 6.

A process computer 140, which is shown in Fig. 6, is operative to control a first control device having the form of the valve 146 controlling the transport of cold water via the pipe 134 to the economizer 132, and a second control device having the form of the damper 50 controlling the magnitude of the ambient air flow 54, to achieve a suitable temperature for the reaction between the HCl and the particulate absorbent material in the contact reactor 4 and in the fabric filter 6. The process computer 140 adjusts the temperature in a first stage and a second stage in the following manner. The present HCl concentration in the cleaned flue gases 14 is measured and is compared with the HCl reference value, in accordance with step A which has been described hereinbefore with reference to Fig. 3. The present relative humidity is measured, and is compared with the relative humidity reference value, in accordance with step B which has been described hereinbefore with reference to Fig. 3. The process computer 140 then determines whether the temperature at which the HCl reacts with the particulate absorbent material in the contact reactor 4 and in the fabric filter 6 needs to be increased or decreased, in accordance with step C which has been described hereinbefore with reference to Fig. 3. In a final step D, which is similar, although not identical, to the step D that has been described hereinbefore with reference to Fig. 3, the process computer 140 sends signals to the control valve 146 and to the damper 50 to open to such a degree that the temperature is adjusted to such a level that the HCl concentration in the cleaned flue gases 14 is kept below the HCl reference value, and such that the relative humidity remains below the relative humidity reference value.

### Example 2

The function of the gas cleaning system 100 of the present invention as described hereinbefore with reference to Fig. 6, will now be explained further by way of a non-limiting example. The properties of the concentrated flue gases 52 are, in this example, the same as those described hereinbefore in Example 1. Table 1, which has been presented hereinbefore with reference to Example 1, indicates the data that have been measured and calculated in said steps A and B at a certain occasion in Example 2. With the properties of Table 1 it is determined in said step C that efforts are necessary to decrease the HCl concentration in the cleaned flue gases 14 and that such efforts include to decrease the temperature at which the HCl reacts with the particulate absorbent material in the contact reactor 4 and in the fabric filter 6. It is, at the specific occasion which is illustrated by means of Table 1, not possible to feed more cold water to the economizer 132, due to the high relative humidity of the cleaned flue gases 14.

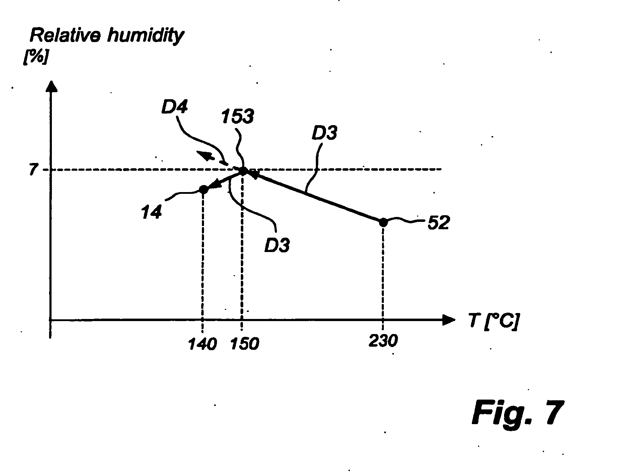

Fig. 7 illustrates the temperature and the relative humidity of the concentrated flue gases 52, the cooled concentrated flue gases 153, and the cleaned flue gases 14 of the flue gas system 100, when, as required in Example 2, the temperature of the concentrated flue gases 52 is adjusted in accordance with said step D for the purpose of achieving the required increase in the HCl removal efficiency without violating the conditions as regards the relative humidity. The change in temperature is depicted by a curve D3. As shown in Fig. 7 the concentrated flue gases 52 have, in Example 2, a temperature, as described hereinbefore, of 230°C and a relative humidity of 5.5%. The process computer 140 controls, in accordance with said step D described hereinbefore, the valve 146 controlling the transport of cold water to the economizer 132 via the pipe 134 to open to such a degree that the concentrated flue gases 52 are cooled by means of non-evaporative cooling to a temperature of 150°C, and a relative humidity of 7%, such that the cooled concentrated flue gases 153 are formed. Furthermore, the process computer 140 controls, in accordance with said step D, the damper 50 to open to such a degree that the gas mixture 2, such gas mixture 2 being a mixture of the cooled concentrated flue gases 153 and the ambient air flow 54, obtains a temperature of 140°C and a relative humidity of about 6%, i.e., the conditions requested, as depicted in Fig. 4a and Fig. 4b, for the reaction between HCl and the particulate absorbent material in the contact reactor 4 and in the fabric filter 6. I will be appreciated that no water is added to the gas mixture 2 and that no further cooling is made, such that the gas mixture 2 and the cleaned flue gases 14 will have the same properties, except for the HCl concentration. The properties of the cleaned flue gases 14 are indicated in Fig. 7, from which it is clear that the temperature has been decreased without violating the requirements as regards the relative humidity. Thus, it can be concluded from Fig. 7 that the cooling in two stages, i.e., in a first stage by means of non-evaporative cooling in an economizer 132, and then in a second stage by means of diluting the cooled concentrated flue gases 153 by means of an ambient air flow 54, effects an efficient cooling of the concentrated flue gases 52 to a temperature sufficiently low to obtain the requested removal of HCl. In Fig. 7 a curve D4, shown as a dashed line, illustrates the effect of cooling the concentrated flue gases 52 by means of non-evaporative cooling only. The curve D4 results in violating the requirement as regards the relative humidity, and thus sticky dust problems may occur.

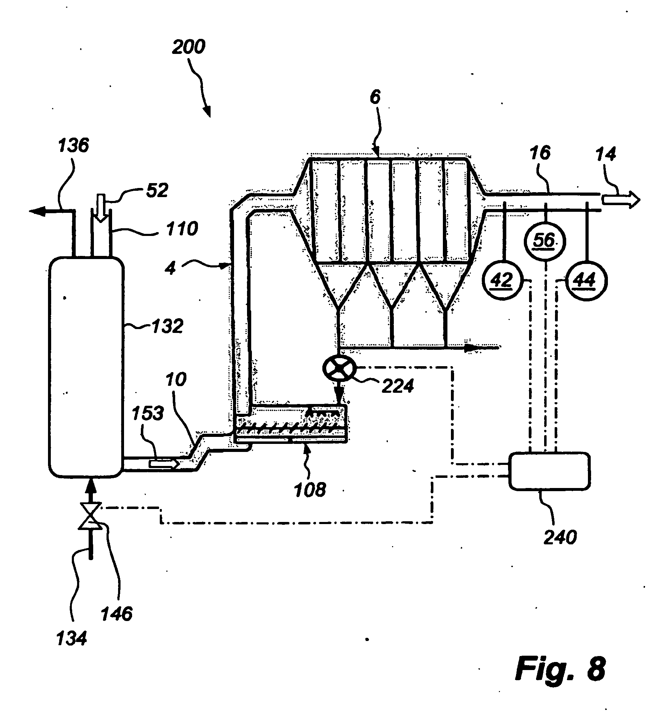

Fig. 8 illustrates a third embodiment of the present invention in the form of a gas cleaning system 200. Those parts of the gas cleaning system 200 that have a similar design and function as the corresponding parts of the gas cleaning system 100 that has been described hereinbefore with reference to Fig. 6 have been given the same reference numerals and are not described in more detail. The main difference between the gas cleaning system 200 and the gas cleaning system 100 described hereinbefore with reference to Fig. 6 is that the gas cleaning system 200 has no means for diluting the concentrated flue gases 52 by means of ambient air. The gas cleaning system 200 has a controllable rotary discharger 224, which controls the flow of dust particles to the mixer 108, and, thus, controls the rate at which the particulate absorbent material is transported to the contact reactor 4.

A process computer 240, which is shown in Fig. 8, is operative to control the gas cleaning system 200 in the following manner. The present HCl concentration in the cleaned flue gases 14 is measured and is compared with the HCl reference value, in accordance with step A which has been described hereinbefore with reference to Fig. 3. The present relative humidity is measured and compared with the relative humidity reference value, in accordance with step B which has been described hereinbefore with reference to Fig. 3. The process computer 240 then determines whether the temperature at which the HCl reacts with the particulate absorbent material in the contact reactor 4 and in the fabric filter 6 needs to be increased or decreased, in accordance with step C which has been described hereinbefore with reference to Fig. 3. In a final step D, which is similar, although not identical, to step D described hereinbefore with reference to Fig. 3, the process computer 240 sends a signal to the control valve 146 controlling the flow of cold water to the economizer 132 via the pipe 134 to open to such a degree that the temperature of the cooled concentrated flue gases 153 is adjusted to such a level that the HCl concentration in the cleaned flue gases 14 is kept below the HCl reference value, and such that the relative humidity remains below the relative humidity reference value. If it, at a specific occasion, would not be possible, for reasons of the necessity to keep the relative humidity below the relative humidity reference value, to decrease the temperature to a low enough value, then the process computer 240 sends a signal to the controllable rotary discharger 224 to increase the speed of the controllable rotary discharger 224 such that the flow of dust, fly ash, and remaining particulate absorbent material from the fabric filter 6 to the mixer 108 is increased. As a direct consequence of such increased speed of the controllable rotary discharger 224 the amount of particulate absorbent material generated in the mixer 108 and transported to the contact reactor 4 is increased, such that a larger flow of particulate absorbent material is mixed with the cooled concentrated flue gases 153 in the contact reactor 4. The increased flow of particulate absorbent material from the mixer 108 to the contact reactor 4 compensates for the fact that the temperature cannot be decreased to the desired low levels. Once the HCl concentration in the cleaned flue gases 14 has been decreased below the HCl reference value, the speed of the controllable rotary discharger 224 is again decreased in order to decrease the recirculation of dust. Thus, the control system 240 of the gas cleaning system 200 may determine to control only one operating parameter, i.e., either the temperature or the amount of particulate absorbent material that is transported to the contact reactor 4, or may determine to control both operating parameters, i.e., both the temperature and the amount of particulate absorbent material that is transported to the contact reactor 4. The gas cleaning system 200 utilizes the control, by means of the economizer 132, of the temperature at which the HCl reacts with the particulate absorbent material, and utilizes the control of the amount of particulate absorbent material that is transported to the contact reactor 4 as a manner of handling situations in which the temperature of the cooled concentrated flue gases 153 is not allowed to be decreased further because of the necessity to keep the relative humidity below the relative humidity reference value. To transport an excessive amount of particulate absorbent material to the contact reactor 4 results in increased wear in the mixer 108 and increased pressure drop, causing increased operating costs. Thus the process computer 240 is, in most cases, operative to adjust the speed of the controllable rotary discharger 224 to the lowest speed possible, with regard to the requirement to achieve sufficient removal of HCl. In some cases, for example waste incinerator plants were cold water is an expensive resource, the process computer 240 can, on the other hand, be operative to keep the amount of cold water that is transported to the economizer 132 via the pipe 134 at the lowest possible amount, with regard to the requirement to achieve sufficient removal of HCl.

### Example 3

The function of the gas cleaning system 200 of the present invention as described hereinbefore with reference to Fig. 8, will now be explained further by way of a non-limiting example. The properties of the concentrated flue gases 52 are, in this example, the same as those described in Example 1. Table 1, which has been presented hereinbefore with reference to the Examples 1 and 2, indicates the data that have been measured and calculated in said steps A and B, described hereinbefore with reference to Fig. 3, at a certain occasion in Example 3. With the properties of Table 1 it is determined in a step C, which is similar, but not identical to that step C which is described with reference to Fig. 3, that efforts are necessary to decrease the HCl concentration in the cleaned flue gases 14. The process computer 240 further finds that the temperature of the cooled concentrated flue gases 153 cannot be further decreased by means of the economizer 132 due to the requirement to keep the relative humidity below the relative humidity reference value.

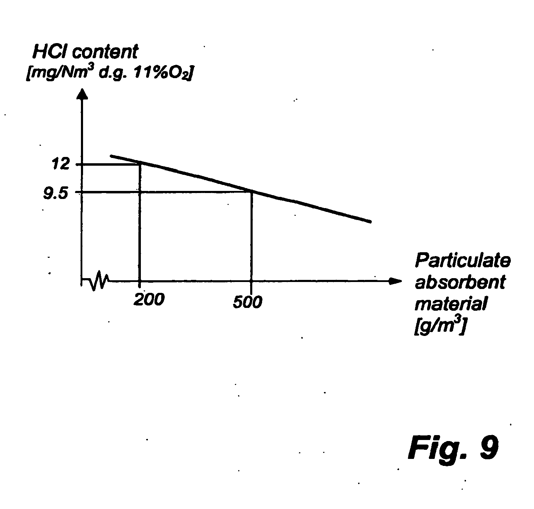

Fig. 9 illustrates a curve which describes the relation between the HCl concentration in the cleaned flue gases 14, such concentration being depicted on the y-axis, and the amount of particulate absorbent material, in grams, that is mixed with each m³ of the flue gases 153 in the contact reactor 4, such amount being depicted on the x-axis of the diagram of Fig. 9. The unit "m³" refers to actual pressure, temperature, and oxygen content of the cooled concentrated flue gases 153 in the fabric filter 6. In Fig. 9 the effect of increasing the amount of particulate absorbent material from 200 g/m³ to 500 g/m³ for the purpose of decreasing the concentration of HCl in the cleaned flue gases 14 from 12 mg HCl/Nm³ d.g. 11%O₂ to 9.5 mg HCl/Nm³ d.g. 11%O₂ without increasing the relative humidity is illustrated. After an increase in the amount of the particulate absorbent material that is transported to the contact reactor 4 to 500 g/m³, the concentration of HCl in the cleaned flue gases 14 decreases to 9.5 mg HCl/Nm³ d.g. 11%O₂, while the temperature of the cleaned flue gases 14 remains at 150°C and the relative humidity remains at 7%.

### Example 4

A gas cleaning system, which had a similar design as the gas cleaning system 1 that has been described hereinbefore with reference to Fig. 1 and Fig. 2, was tested with respect to the removal of HCl. The gas cleaning system was tested in two different operating modes; in a non-dilution mode, and in a controlled dilution mode. In the non-dilution mode the gas cleaning system was controlled by adjusting the amount of water supplied to the mixer. In the controlled dilution mode the temperature influencing the reaction between the particulate absorbent material and the HCl was controlled in accordance with an embodiment of the present invention in a first and a second stage: In a first stage said temperature was controlled by means of controlling a flow of ambient air that was mixed with the concentrated flue gases to dilute and cool them, before the flue gases entered the contact reactor. In a second stage said temperature was controlled by means of controlling the amount of water that was supplied to the mixer that mixed the particulate absorbent material with water before introducing the particulate absorbent material in the contact reactor. Furthermore, in the controlled dilution mode the amount of particulate absorbent material that was transported to the contact reactor by means of the mixer was also controlled. The aim was to keep the amount of particulate absorbent material that was transported to the contact reactor at the lowest possible level. The concentrated flue gases had, in both operating modes, a temperature of 200°C, a content of water, H₂O, of 14%, a content of oxygen, O₂, of 10% dry gas, and contained 650 mg HCl/Nm³ dry gas, 410 mg SO_{2/}Nm³ dry gas, and about 2 g/Nm³ of fly ash. The ambient air flow, which was utilized in the controlled dilution mode, had a temperature of 30°C, an oxygen content of 21%, and could be considered to be dry. The reference value for the concentration of HCl in the cleaned flue gases was 5 mg HCl/Nm³ d.g. 11%O₂. The relative humidity reference value was 7%. Table 2 illustrates the data in the two operating modes.

**Table 2. Operating data in non-dilution mode, and in controlled dilution mode.**

| Property | Unit | Non-dilution mode | Controlled dilution mode |
|---|---|---|---|
| Concentrated flue gases | Nm³/h | 15000 | 15000 |
| Temp. conc. flue gases | °C | 200 | 200 |
| Ambient air flow | Nm³/h | 0 | 4091 |
| Total gas flow to contact reactor | Nm³/h | 15000 | 19091 |
| Temp before contact reactor | °C | 200 | 164 |
| Water supplied to mixer | kg/h | 436 | 286 |
| Temp in cleaned flue gases (after fabric filter) | °C | 142 | 133 |
| Particulate absorbent material transported to contact reactor | kg/h | 15000 | 10000 |
| Fresh absorbent (CaO) | kg/h | 24 | 24 |
| Stoichiometry (SR) | - | 1.64 | 1.64 |
| Relative humidity in cleaned flue gases | % | 7 | 7 |
| HCl in cleaned flue gases | mg HCl/Nm³ d.g. 11%O₂ | 8.5 | 4.0 |

As can be seen from table 2 the addition of the ambient air flow in the controlled dilution mode decreases the temperature of the flue gases from 200°C to 164°C already before the contact reactor. As a consequence the amount of water that needs to be supplied to the mixer 8 is much lower in the controlled dilution mode. The temperature in the cleaned flue gases, which temperature is representative for the temperature at which the particulate absorbent material reacts with the HCl in the contact reactor and in the fabric filter, is 133°C in the controlled dilution mode, which is 9°C lower than in the non-dilution mode, resulting in a significant improvement in the removal efficiency as regards HCl. Thanks to the dilution with the ambient air, which is dry, the temperature of 133°C can be achieved without significantly increasing the relative humidity. The effect of such low temperature is that the emission of HCl is only 4 mg HCl/Nm³ d.g. 11%O₂ in the controlled dilution mode, which means that the emission has been reduced by more than 50% compared to the non-dilution mode and is below the HCl reference value. In the non-dilution mode it would be necessary to increase the stoichiometric ratio (SR) to more than about 3 to be able to achieve an emission of HCl that would be below the HCl reference value. It can further be recognised from table 2 that the amount of particulate absorbent material that is transported to the contact reactor is only 10 000 kg/h in the controlled dilution mode, which corresponds to about 350 g per m³ of the process gases, the reference for the gas volume in m³ being the actual temperature, pressure and oxygen concentration inside the fabric filter. Thus, table 2 clearly illustrates that controlling the gas cleaning system using the controlled dilution mode makes it possible to reduce the HCl emission, reduce the amount of water added to the mixer 8, and reduce the amount of particulate absorbent material that is transported to the contact reactor to below that possible using the non-dilution mode.

It will be appreciated that numerous variants of the above described embodiments are possible within the scope of the appended claims.

It has been described hereinbefore that the gas cleaning systems 1, 100, 200 are utilized for removing hydrochloric acid from hot process gases, such as flue gases. It will be appreciated that other pollutants, such as sulphur dioxide, mercury, fly ash, etc., are also removed from the hot process gases simultaneously with the removal of the hydrochloric acid. Such other pollutants are, however, seldom decisive for the way in which the process computer 40, 140, 240 controls the operation of the gas cleaning system 1, 100, 200, in particular not in such cases in which the hot process gases 52 originate from a waste incineration plant which incinerates mainly municipal solid waste. Thus, the control method of the present invention, such control method being based on control of the removal of hydrochloric acid, will result in efficient removal of other pollutants as well. The present invention is particularly efficient when the average concentration of hydrochloric acid in the hot process gases 52 is in the range of 100-5000 mg HCl/Nm³ d.g. 11%O₂, and the average concentration of sulphur dioxide in the hot process gases 52 is in the range of 0-1500 mg SO₂/Nm³ d.g. 11%O₂.

Hereinbefore it has been described that the dust separator has the form of a fabric filter 6. It will be appreciated that other types of dust separators, such as electrostatic precipitators and cyclones, can also be utilized without departing from the scope of the present invention. Furthermore, it will be appreciated that a device other than the mixer 8, 108 that has been described hereinbefore can be utilized for transporting the particulate absorbent material to the contact reactor 4. For example, a dust nozzle which disperses the particulate absorbent material by means of pressurized air can be utilized.

Fig. 1 and Fig. 2 illustrate the gas cleaning system 1 in which the amount of water supplied to the mixer 8 can be controlled. Furthermore, Fig. 1, Fig. 2, and Fig. 6 illustrate the gas cleaning systems 1, 100 in which the magnitude of a diluting gas flow 54 that is mixed with the concentrated flue gases 52 can be controlled. Fig. 8 illustrates the gas cleaning system 200 in which the amount of particulate absorbent material that is forwarded to the contact reactor 4 can be controlled. It will be appreciated that it is also possible, still staying within the scope of the present invention, to utilize a gas cleaning system which utilizes control of both the flow of water to the mixer 8, and of the amount particulate absorbent material that is transported from said mixer 8 to said contact reactor 4. A process computer controlling such a gas cleaning system would thus have the option of adjusting the water flow to the mixer 8 and/or the amount of particulate absorbent material forwarded to the contact reactor 4. Furthermore, such a gas cleaning system could, additionally, utilize the control of the magnitude of a diluting gas flow 54 diluting the concentrated process gases 52. The process computer would thus be operative to control, at each occasion, that process parameter, i.e., the temperature at which the HCl reacts with the particulate absorbent material, and/or the amount of particulate absorbent material transported to the contact reactor 4, which process parameter, or parameters, that provides the best option for adjusting the operation of the gas cleaning system at that specific occasion with regard to the relative humidity, etc.

Hereinbefore it has been described that the relative humidity is measured in the cleaned flue gases 14. It will be appreciated that it is also possible, without departing from the essence of the present invention, to measure a relative humidity, which is relevant as regards the need to avoid dust handling problems, such as stickiness, in another position. For example a relative humidity could be measured inside the fabric filter 6 or in the upper portion of the contact reactor 4.

Hereinbefore it has been described that a gas cleaning system 1, 100, 200 preferably comprises two stages of adjusting the HCl concentration in the cleaned flue gases. It will be appreciated that three or more stages could also be utilized. For example the gas cleaning system 1, which has been described hereinbefore with reference to Fig. 1 and Fig. 2, could be provided with a controllable rotary discharger 224 of the type that has been described hereinbefore with reference to Fig. 8. Thus, in such a gas cleaning system a process computer is operative to control the temperature by means of controlling the magnitude of the ambient air flow 54 and by means of controlling the flow of water to the mixer 8 via the pipe 32, and is, further, operative to control the amount of the particulate absorbent material that is transported to the contact reactor 4 by means of controlling the controllable rotary discharger 224.

Hereinbefore it has been described that the measurement of the HCl concentration in the cleaned process gases 14 and the relative humidity is performed by means of a direct measurement of the respective condition in the cleaned flue gases 14. It is also possible, without departing from the essence of the present invention, to measure the HCl concentration in the cleaned flue gases 14 and/or the relative humidity indirectly, for instance by means of calculating an expected HCl concentration and/or an expected relative humidity based on an estimation based on measurements of the concentrations of HCl and water vapour in the concentrated flue gases 52. It will be appreciated that such indirect measurement has a lower accuracy than a direct measurement which is preferably performed, as has been described hereinbefore, in the duct 16.

Hereinbefore it has been described, with reference to Fig. 6 and Fig. 8, that an economizer 132 is utilized for indirect cooling, i.e., non-evaporative cooling, of the concentrated process gases 52, before mixing such concentrated process gases 52 with the particulate absorbent material in the contact reactor 4. It is also possible, as alternative to the economizer 132 and without departing from the essence of the present invention, to utilize a conditioning tower, in which water is sprayed directly into the concentrated process gases 52 to effect evaporative cooling thereof. Furthermore, it has been described hereinbefore with reference to Fig. 6 that the ambient air flow 54, which is supplied via the dilution air duct 48, is mixed with the concentrated flue gases 52 downstream of the economizer 132. In an alternative embodiment the dilution air duct 48 can be located upstream of the economizer 132. The latter embodiment has, however, a disadvantage in that the economizer 132 is supplied with a gas that has already been partially cooled, which results in a lower heat recovery in the economizer 132.

## Claims

1. A method of separating hydrochloric acid from hot process gases (52), such as flue gases, in which method the process gases (52) are transported to a gas cleaning system (1; 100; 200), said gas cleaning system (1; 100; 200) comprising a contact reactor (4) in which the process gases (52) are mixed with a particulate absorbent material, such that said particulate absorbent material reacts with hydrochloric acid, and a dust separator (6) in which the particulate absorbent material is captured, and in which method cleaned process gases (14) leave the dust separator (6),
**characterised in**
measuring the hydrochloric acid concentration in the cleaned process gases (14),
measuring a relative humidity influencing the handling properties of the particulate absorbent material in the gas cleaning system (1; 100; 200), and
controlling, in response to the measured hydrochloric acid concentration in the cleaned process gases (14), and the measured relative humidity, a temperature influencing the reaction between said particulate absorbent material and the hydrochloric acid in such a manner that the hydrochloric acid concentration in the cleaned process gases (14) is adjusted with respect to a hydrochloric acid reference value, and that, simultaneously, said relative humidity is adjusted with respect to a relative humidity reference value.

2. A method according to claim 1, wherein said temperature influencing the reaction between said particulate absorbent material and the hydrochloric acid being controlled in at least one of at least a first and a second stage.

3. A method according to claim 2, the method further comprising the step of determining in which of said at least a first and a second stage that said temperature influencing the reaction between said particulate absorbent material and the hydrochloric acid should be controlled, prior to executing said step of controlling said temperature.

4. A method according to any one of claims 2-3, wherein at least one of said at least a first and a second stage comprises controlling an amount of a diluting gas (54) being added to said hot process gases (52) prior to said process gases (52) entering the contact reactor (4), said diluting gas (54) having a lower temperature than said hot process gases (52).

5. A method according to claim 4, wherein said first stage comprises adding said diluting gas (54) to said hot process gases (52) such that a gas mixture (2) is formed, and said second stage comprises adjusting the temperature of said gas mixture (2) by means of an evaporative cooling by means of water.

6. A method according to claim 4, wherein said first stage comprises adjusting the temperature of said process gases (52) by means of a non-evaporative cooling by means of water to obtain cooled process gases (153), and said
temperature influencing the reaction between said particulate absorbent material and the second stage comprises adding said diluting gas (54) to said cooled process gases (153).

7. A method according to any one of claims 4-6, wherein said diluting gas is ambient air (54).

8. A method according to any one of the preceding claims, wherein an amount of said particulate absorbent material that is transported to the contact reactor (4) being controlled to be within the range of 150-5000 g per m³ of the process gases (52), the reference for the gas volume in m³ being the actual temperature, pressure and oxygen concentration inside the dust separator (6).

9. A method according to claim 8, further comprising controlling said temperature influencing the reaction between said particulate absorbent material and the hydrochloric acid by means of non-evaporative cooling.

10. A gas cleaning system for separating hydrochloric acid from hot process gases (52), such as flue gases, said gas cleaning system (1; 100; 200) comprising a contact reactor (4) which is operative for mixing the hot process gases (52) with a particulate absorbent material, such that said particulate absorbent material reacts with hydrochloric acid, and a dust separator (6) which is operative for capturing the particulate absorbent material, the dust separator (6) being operative for discharging cleaned process gases (14),
**characterised in**
the gas cleaning system (1; 100; 200) further comprising
a hydrochloric acid measurement device (42), which is operative for the purpose of measuring the hydrochloric acid concentration in the cleaned process gases (14),
a humidity measurement device (44), which is operative for the purpose of measuring the relative humidity influencing the handling properties of the particulate absorbent material in the gas cleaning system (1; 100; 200),
a control system (40; 140; 240), which is operative for the purpose of controlling a temperature influencing the reaction between said particulate absorbent material and the hydrochloric acid that is to be controlled for the purpose of adjusting the hydrochloric acid concentration in the cleaned process gases (14) with respect to a hydrochloric acid reference value, and
at least one control device (46, 50; 146, 50; 146, 224) which is operative for the purpose of controlling, as determined by the control system (40; 140; 240) in response to measurements made by the hydrochloric acid measurement device (42) and the humidity measurement device (44), said temperature influencing the reaction between said particulate absorbent material and the hydrochloric acid in such a manner that the hydrochloric acid concentration in the cleaned process gases (14) is adjusted with respect to the hydrochloric acid reference value, and that, simultaneously, said relative humidity is adjusted with respect to a relative humidity reference value.

11. A gas cleaning system according to claim 10, wherein said at least one control device comprises a first control device (50; 146; 146), and a second control device (46; 50; 224), said second control device (46; 50; 224) being located downstream, as viewed with reference to the direction of flow of the hot process gases (52), of said first control device (50; 146; 146), said control system (40; 140; 240) being operative for controlling said first control device and said second control device.

12. A gas cleaning system according to any one of claims 10-11, wherein said at least one control device comprises a damper (50) of a dilution gas duct (48) being operative for mixing a diluting gas (54) with the hot process gases (52), such diluting gas (54) having a lower temperature than said hot process gases (52), for the purpose of controlling said temperature influencing the reaction between said particulate absorbent material and the hydrochloric acid.

13. A gas cleaning system according to any one of claims 10-12, wherein said at least one control device comprises a device (224) for controlling that amount of said particulate absorbent material which is transported to the contact reactor (4).

14. A gas cleaning system according to any one of claims 10-13, wherein said at least one control device comprises a control valve (46, 146) for controlling an amount of water used in controlling the temperature influencing the reaction between said particulate absorbent material and the hydrochloric acid.

## Patentansprüche

1. Verfahren zur Trennung von Salzsäure von heißen Abgasen (52), wie Rauchgasen, wobei in dem Verfahren die Abgase (52) zu einem Gasreinigungssystem (1; 100; 200) transportiert werden, wobei das Gasreinigungssystem (1; 100; 200) einen Kontaktkessel (4) aufweist, in dem die Abgase (52) mit einem Teilchenabsorptionsmaterial gemischt werden, so dass das Teilchenabsorptionsmaterial mit Salzsäure reagiert, sowie einen Staubabscheider (6), in dem das Teilchenabsorptionsmaterial aufgefangen wird, und wobei in dem Verfahren gereinigte Abgase (14) aus dem Staubabscheider (6) austreten,
**gekennzeichnet durch**
das Messen der Salzsäurekonzentration in den gereinigten Abgasen (14),
das Messen einer relativen Feuchte, die die Handhabungseigenschaften des Teilchenabsorptionsmaterials in dem Gasreinigungssystem (1; 100; 200) beeinflussen, und
das Steuern, abhängig von der gemessenen Salzsäurekonzentration in den gereinigten Abgasen (14) und der gemessenen relativen Feuchte, einer Temperatur, die die Reaktion zwischen dem Teilchenabsorptionsmaterial und der Salzsäure beeinflusst, derart, dass die Salzsäurekonzentration in den gereinigten Abgasen (14) in Bezug auf einen Salzsäurereferenzwert eingestellt wird und dass gleichzeitig die relative Feuchte in Bezug auf einen Referenzwert der relativen Feuchte eingestellt wird.

2. Verfahren nach Anspruch 1, wobei die Temperatur, die die Reaktion zwischen dem Teilchenabsorptionsmaterial und der Salzsäure beeinflusst, in mindestens einer von mindestens einer ersten und einer zweiten Stufe gesteuert wird.

3. Verfahren nach Anspruch 2, wobei das Verfahren des Weiteren den Schritt des Bestimmens aufweist, in welcher der mindestens einen ersten und einen zweiten Stufe die Temperatur, die die Reaktion zwischen dem Teilchenabsorptionsmaterial und der Salzsäure beeinflusst, gesteuert werden soll, bevor der Schritt des Steuerns der Temperatur ausgeführt wird.

4. Verfahren nach einem der Ansprüche 2 bis 3, wobei mindestens eine der mindestens einen ersten und einen zweiten Stufe das Steuern einer Menge eines Verdünnungsgases (54) umfasst, die den heißen Abgasen (52) zugesetzt wird, bevor die Abgase (52) in den Kontaktkessel (4) eintreten, wobei das Verdünnungsgas (54) eine geringere Temperatur aufweist als die heißen Abgase (52).

5. Verfahren nach Anspruch 4, wobei die erste Stufe das Zusetzen des Verdünnungsgases (54) zu den heißen Abgasen (52) umfasst, so dass ein Gasgemisch (2) gebildet wird, und die zweite Stufe das Einstellen der Temperatur des Gasgemisches (2) mit Hilfe einer Verdunstungskühlung durch Wasser umfasst.

6. Verfahren nach Anspruch 4, wobei die erste Stufe das Einstellen der Temperatur der Abgase (52) mit Hilfe einer nicht auf Verdunstung basierte Kühlung durch Wasser umfasst, um gekühlte Abgase (153) zu erhalten, und die zweite Stufe das Zusetzen des Verdünnungsgases (54) zu den gekühlten Abgasen (153) umfasst.

7. Verfahren nach einem der Ansprüche 4 bis 6, wobei das Verdünnungsgas Umgebungsluft (54) ist.

8. Verfahren nach einem der vorangehenden Ansprüche, wobei eine Menge des Teilchenabsorptionsmaterials, die zu dem Kontaktkessel (4) transportiert wird, so gesteuert wird, dass sie im Bereich von 150 bis 5000 g pro m³ der Abgase (52) liegt, wobei die Referenz für das Gasvolumen in m³ die tatsächliche Temperatur, der Druck und die Sauerstoffkonzentration im Inneren des Staubabscheiders (6) ist.

9. Verfahren nach Anspruch 8, des Weiteren umfassend das Steuern der Temperatur, die die Reaktion zwischen dem Teilchenabsorptionsmaterial und der Salzsäure beeinflusst, mit Hilfe einer Nicht-Verdunstungskühlung.

10. Gasreinigungssystem zur Trennung von Salzsäure von heißen Abgasen (52), wie Rauchgasen, wobei das Gasreinigungssystem (1; 100; 200) einen Kontaktkessel (4) aufweist, der zum Mischen der heißen Abgase (52) mit einem Teilchenabsorptionsmaterial funktionsfähig ist, so dass das Teilchenabsorptionsmaterial mit Salzsäure reagiert, und einen Staubabscheider (6), der zum Auffangen des Teilchenabsorptionsmaterials funktionsfähig ist, wobei der Staubabscheider (6) zum Abgeben von gereinigten Abgasen (14) funktionsfähig ist,
**dadurch gekennzeichnet, dass**
das Gasreinigungssystem (1; 100; 200) des Weiteren umfasst
eine Salzsäuremessvorrichtung (42), die zum Messen der Salzsäurekonzentration in den gereinigten Abgasen (14) funktionsfähig ist;
eine Feuchtigkeitsmessvorrichtung (44), die zum Messen der relativen Feuchte, die die Handhabungseigenschaften des Teilchenabsorptionsmaterials beeinflusst, in dem Gasreinigungssystem (1; 100; 200) funktionsfähig ist,
ein Steuersystem (40; 140; 240), das zum Steuern einer Temperatur, die die Reaktion zwischen dem Teilchenabsorptionsmaterial und der Salzsäure beeinflusst, funktionsfähig ist, die zum Einstellen der Salzsäurekonzentration in den gereinigten Abgasen (14) in Bezug auf einen Salzsäurereferenzwert gesteuert wird, und
mindestens eine Steuervorrichtung (46, 50; 146, 50; 146; 224), die zum Steuern, anhand der Bestimmung durch das Steuersystem (40; 140; 240) abhängig von Messungen, die von der Salzsäuremessvorrichtung (42) und der Feuchtigkeitsmessvorrichtung (44) durchgeführt werden, der Temperatur funktionsfähig ist, die die Reaktion zwischen dem Teilchenabsorptionsmaterial und der Salzsäure beeinflusst, in derartiger Weise, dass die Salzsäurekonzentration in den gereinigten Abgasen (14) in Bezug auf den Salzsäurereferenzwert eingestellt wird und dass gleichzeitig die relative Feuchte in Bezug auf einen Referenzwert der relativen Feuchte eingestellt wird.

11. Gasreinigungssystem nach Anspruch 10, wobei die mindestens eine Steuervorrichtung eine erste Steuervorrichtung (50; 146; 146) und eine zweite Steuervorrichtung (46; 50; 224) aufweist, wobei die zweite Steuervorrichtung (46; 50; 224) bei Betrachtung in Bezug auf die Strömungsrichtung der heißen Abgase (52) stromabwärts der ersten Steuervorrichtung (50; 146; 146) angeordnet ist, wobei das Steuersystem (40; 140; 240) zum Steuern der ersten Steuervorrichtung und der zweiten Steuervorrichtung funktionsfähig ist.

12. Gasreinigungssystem nach einem der Ansprüche 10 bis 11, wobei die mindestens eine Steuervorrichtung eine Klappe (50) einer Verdünnungsgasleitung (48) aufweist, die funktionsfähig ist, um ein Verdünnungsgas (54) mit den heißen Abgasen (52) zu mischen, wobei das Verdünnungsgas (54) eine geringere Temperatur aufweist als die heißen Abgase (52), um die Temperatur, die die Reaktion zwischen dem Teilchenabsorptionsmaterial und der Salzsäure beeinflusst, zu steuern.

13. Gasreinigungssystem nach einem der Ansprüche 10 bis 12, wobei die mindestens eine Steuervorrichtung eine Vorrichtung (224) zum Steuern der Menge an Teilchenabsorptionsmaterial umfasst, die zu dem Kontaktkessel (4) transportiert wird.

14. Gasreinigungssystem nach einem der Ansprüche 10 bis 13, wobei die mindestens eine Steuervorrichtung ein Regelventil (46, 146) zum Steuern einer Menge an Wasser umfasst, die bei der Steuerung der Temperatur, die die Reaktion zwischen dem Teilchenabsorptionsmaterial und der Salzsäure beeinflusst, verwendet wird.

## Revendications

1. Procédé de séparation d'acide chlorhydrique à partir de gaz de procédé chauds (52), tels que des gaz de carneau, procédé dans lequel les gaz de procédé (52) sont transportés vers un système de nettoyage des gaz (1, 100, 200), ledit système de nettoyage des gaz (1, 100, 200) comprenant un réacteur de contact (4) dans lequel les gaz de procédé (52) sont mélangés avec un matériau absorbant particulaire, de telle sorte que ledit matériau absorbant particulaire réagisse avec l'acide chlorhydrique, et un séparateur de poussières (6) dans lequel le matériau absorbant particulaire est capturé, et procédé dans lequel les gaz de procédé nettoyés (14) quittent le séparateur de poussières (6), **caractérisé par**
la mesure de la concentration d'acide chlorhydrique dans les gaz de procédé nettoyés (14),
la mesure de l'humidité relative influant sur les propriétés de maniement du matériau absorbant particulaire dans le système de nettoyage des gaz (1, 100, 200), et
la régulation, en réponse à la concentration d'acide chlorhydrique mesurée dans les gaz de procédé nettoyés (14) et à l'humidité relative mesurée, d'une température influant sur la réaction entre ledit matériau absorbant particulaire et l'acide chlorhydrique de manière à ajuster la concentration d'acide chlorhydrique dans les gaz de procédé nettoyés (14) par rapport à une valeur de référence pour l'acide chlorhydrique, et à ajuster simultanément ladite humidité relative par rapport à une valeur de référence pour l'humidité relative.

2. Procédé selon la revendication 1, dans lequel ladite température influant sur la réaction entre ledit matériau absorbant particulaire et l'acide chlorhydrique est régulée dans au moins un étage parmi au moins un premier et un deuxième étage.

3. Procédé selon la revendication 2, le procédé comprenant en outre l'étape consistant à déterminer dans quel étage parmi lesdits au moins un premier et un deuxième étage il faut réguler ladite température influant sur la réaction entre ledit matériau absorbant particulaire et l'acide chlorhydrique, avant d'exécuter ladite étape de régulation de ladite température.

4. Procédé selon l'une quelconque des revendications 2-3, dans lequel au moins un étage parmi lesdits au moins un premier et un deuxième étage comprend la régulation d'une quantité d'un gaz de dilution (54) qui est ajoutée auxdits gaz de procédé chauds (52) avant que lesdits gaz de procédé (52) pénètrent dans le réacteur de contact (4), ledit gaz de dilution (54) ayant une température plus basse que lesdits gaz de procédé chauds (52).

5. Procédé selon la revendication 4, dans lequel ledit premier étage comprend l'addition dudit gaz de dilution (54) auxdits gaz de procédé chauds (52) de manière à former un mélange de gaz (2), et ledit deuxième étage comprend l'ajustement de la température dudit mélange de gaz (2) au moyen d'un refroidissement par évaporation au moyen d'eau.

6. Procédé selon la revendication 4, dans lequel ledit premier étage comprend l'ajustement de la température desdits gaz de procédé (52) au moyen d'un refroidissement sans évaporation au moyen d'eau pour obtenir des gaz de procédé refroidis (153), et ledit deuxième étage comprend l'addition dudit gaz de dilution (54) auxdits gaz de procédé refroidis (153).

7. Procédé selon l'une quelconque des revendications 4-6, dans lequel ledit gaz de dilution est l'air ambiant (54).

8. Procédé selon l'une quelconque des revendications précédentes, dans lequel une quantité dudit matériau absorbant particulaire qui est transportée vers le réacteur de contact (4) est régulée de façon à se situer sur la plage de 150-5000 g par m³ des gaz de procédé (52), la référence pour le volume gazeux en m³ étant les valeurs réelles de la température, de la pression et de la concentration d'oxygène à l'intérieur du séparateur de poussières (6).

9. Procédé selon la revendication 8, comprenant en outre la régulation de ladite température influant sur la réaction entre ledit matériau absorbant particulaire et l'acide chlorhydrique au moyen d'un refroidissement sans évaporation.

10. Système de nettoyage des gaz pour la séparation d'acide chlorhydrique à partir de gaz de procédé chauds (52), tels que des gaz de carneau, ledit système de nettoyage des gaz (1, 100, 200) comprenant un réacteur de contact (4) qui convient pour mélanger les gaz de procédé chauds (52) avec un matériau absorbant particulaire, de manière à faire réagir ledit matériau absorbant particulaire avec l'acide chlorhydrique, et un séparateur de poussières (6) qui convient pour capturer le matériau absorbant particulaire, le séparateur de poussières (6) étant opérationnel pour décharger les gaz de procédé nettoyés (14),
**caractérisé par le fait que**
le système de nettoyage des gaz (1, 100, 200) comprend en outre
un dispositif de mesure de l'acide chlorhydrique (42), qui convient pour permettre la mesure de la concentration d'acide chlorhydrique dans les gaz de procédé nettoyés (14),
un dispositif de mesure de l'humidité (44), qui convient pour permettre la mesure de l'humidité relative influant sur les propriétés de maniement du matériau absorbant particulaire dans le système de nettoyage des gaz (1, 100, 200),
un système de régulation (40, 140, 240), qui convient pour permettre la régulation d'une température influant sur la réaction entre ledit matériau absorbant particulaire et l'acide chlorhydrique devant être régulée pour permettre l'ajustement de la concentration d'acide chlorhydrique dans les gaz de procédé nettoyés (14) par rapport à une valeur de référence pour l'acide chlorhydrique, et
au moins un dispositif de régulation (46, 50 ; 146, 50 ; 146, 224) qui convient pour permettre la régulation, telle qu'elle est déterminée par le système de régulation (40, 140, 240) en réponse à des mesures effectuées par le dispositif de mesure de l'acide chlorhydrique (42) et le dispositif de mesure de l'humidité (44), de ladite température influant sur la réaction entre ledit matériau absorbant particulaire et l'acide chlorhydrique de manière à ajuster la concentration d'acide chlorhydrique dans les gaz de procédé nettoyés (14) par rapport à la valeur de référence pour l'acide chlorhydrique, et à ajuster simultanément ladite humidité relative par rapport à une valeur de référence pour l'humidité relative.

11. Système de nettoyage des gaz selon la revendication 10, dans lequel ledit au moins un dispositif de régulation comprend un premier dispositif de régulation (50, 146, 146), et un deuxième dispositif de régulation (46, 50, 224), ledit deuxième dispositif de régulation (46, 50, 224) étant situé en aval, si l'on regarde par rapport à la direction de l'écoulement des gaz de procédé chauds (52), dudit premier dispositif de régulation (50, 146, 146), ledit système de régulation (40, 140, 240) étant opérationnel pour la régulation dudit premier dispositif de régulation et dudit deuxième dispositif de régulation.

12. Système de nettoyage des gaz selon l'une quelconque des revendications 10-11, dans lequel ledit au moins un dispositif de régulation comprend un registre (50) d'une conduite de gaz de dilution (48) qui convient pour mélanger un gaz de dilution (54) avec les gaz de procédé chauds (52), ce gaz de dilution (54) ayant une température plus basse que lesdits gaz de procédé chauds (52), pour permettre la régulation de ladite température influant sur la réaction entre ledit matériau absorbant particulaire et l'acide chlorhydrique.

13. Système de nettoyage des gaz selon l'une quelconque des revendications 10-12, dans lequel ledit au moins un dispositif de régulation comprend un dispositif (224) permettant de réguler la quantité dudit matériau absorbant particulaire qui est transportée vers le réacteur de contact (4).

14. Système de nettoyage des gaz selon l'une quelconque des revendications 10-13, dans lequel ledit au moins un dispositif de régulation comprend une soupape de régulation (46, 146) permettant de réguler la quantité d'eau utilisée dans la régulation de la température influant sur la réaction entre ledit matériau absorbant particulaire et l'acide chlorhydrique.
